# EUROPEAN PATENT APPLICATION

(11) **EP 1 717 101 A1**
(43) Date of publication of application: **02.11.2006**
(21) Application number: 06008928.1
(22) Date of filing: 28.04.2006
(51) Int. Cl.: B60P 1/28

(54) **Locking device for the dump body of an industrial vehicle**

(30) Priority: 29.04.2005 IT BO20050291
(71) Applicant: Hydro-Metal S.r.l., 41030 Sorbara di Bomporto MO (IT)
(72) Inventor: Fulvio, Serafini, Sorbara di Bomporto (MO) (IT)
(74) Representative: Dall'Olio, Giancarlo

(57) **Abstract**

The present locking device 1 for the dump body 10 of an industrial vehicle 100 comprises: a fixed coupling member 3, provided on the lower face of the dump body 10, fit to engage a corresponding ball joint member 4 provided on the vehicle frame 11; first locking means 40, provided in said ball joint member 4, driven by corresponding driving means 5 for engaging/disengaging with/from second locking means 30, provided in said fixed coupling member 3, in order to allow this latter to be locked/unlocked with respect to the ball joint member 4.

## Description

The present invention fits into the technical sector relating to industrial vehicles provided with dump body, like dump trucks. More specifically, the present invention relates to an automated device able to allow the dump body to be locked to the corresponding truck frame.

It is known that industrial vehicles provided with a dump body generally comprise a group of locking devices, which are designed to prevent the dump body for any shifting with respect to the truck frame when the vehicle runs, and to allow its dumping when necessary.

These known locking devices usually comprise a fixed coupling member, mounted on the lower face of the dump body, and a corresponding ball joint member, fit to pivotably engage said coupling member.

The ball joint member comprises a spherical pin mounted at the end of a shaft, which is fixed to the truck frame and oriented horizontally and transversely with respect to the travel direction of the industrial vehicle.

The coupling member comprises a bell shaped body, open at its bottom, which defines a housing seat for the spherical pin when it is pivotably locked to said bell shaped body.

A side recess, open at its lower end, is provided in the aforesaid bell shaped body, fit to receive the spherical pin shaft.

Inside the bell shaped body there is provided an antifriction bearing, made of a suitable plastic material, removably fixed to the inner face of the same bell shaped body and having its inner face matching the outer one of the spherical pin, for allowing this latter to perform low-friction rotations when the dump body tilts over.

The bell shaped body is moreover provided with a pair of side, counter-faced holes, made close to its lower face, fit to receive a removable wrist pin for preventing the spherical pin from disengage itself from its seat.

Four of the aforesaid locking devices are usually mounted at the corners of the dump body and of the truck frame, so as to allow the dump body to be tilted according to three different orientations.

A drawback of the known locking devices is due to a series of manual operations that have to be performed before the dump body can be tilted over. More specifically, the wrist pins of the pair of locking devices which are located far from the tilting axis must be manually removed, and then replaced after the dumping operation has been carried out.

By example, in order to allow the dump body to be tilted over to the right side, the wrist pins on the left side must be manually removed, while in order to allow the dump body to be tilted over to the left side, the wrist pins on the right side must be removed. In the same way, in order to allow the dump body to be tilted over to the rear side, both the pins on the front side must be removed.

After the wrist pins have been removed, the dump body is normally tilted over by means of a hydraulic cylinder arranged on the truck frame in a central position, and acting on the lower face of the same dump body.

As all the dumping operations are usually accomplished by the same operator, which is also the vehicle's driver, and as the same operations often need to be accomplished on several steps, it can be understood that carrying out a whole dumping operation can be somewhat awkward and tiresome, and can lead to make some mistake that could be even very dangerous.

It has to be noted that the operator itself can be subject to injuries when carrying out the unlocking and locking operation.

It is an object of the present invention to remove the above described drawbacks by means of a locking device for the dump body of an industrial vehicle which allows the operating phases preceeding and following the dumping operation to be totally automated, thus allowing the operator to perform them without leaving the vehicle cab.

Another object of the present invention is to provide a locking device which improves the operator's safety while speeding up the dumping operation.

A further object of the present invention is to provide a locking device which allows all the dumping operation to be driven from a single operating station, either located at the vehicle's cab or at any other location in the vehicle.

All the aforesaid objects are attained by a locking device for the dump body of an industrial vehicle made according to the contents of the appended Claims. All the characteristic features of the present invention will be pointed out in the following detailed description, with reference to non-exclusive embodiments of the invention and to the accompanying drawing tables, wherein:
- figure 1 shows schematically a rear view of an industrial vehicle provided with the locking device according to the present invention;

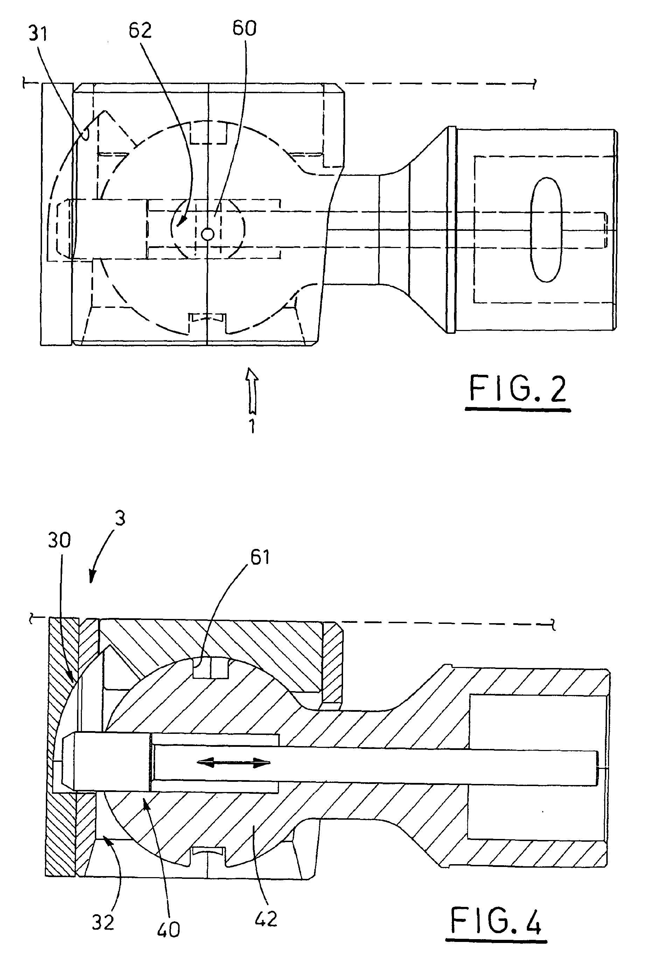

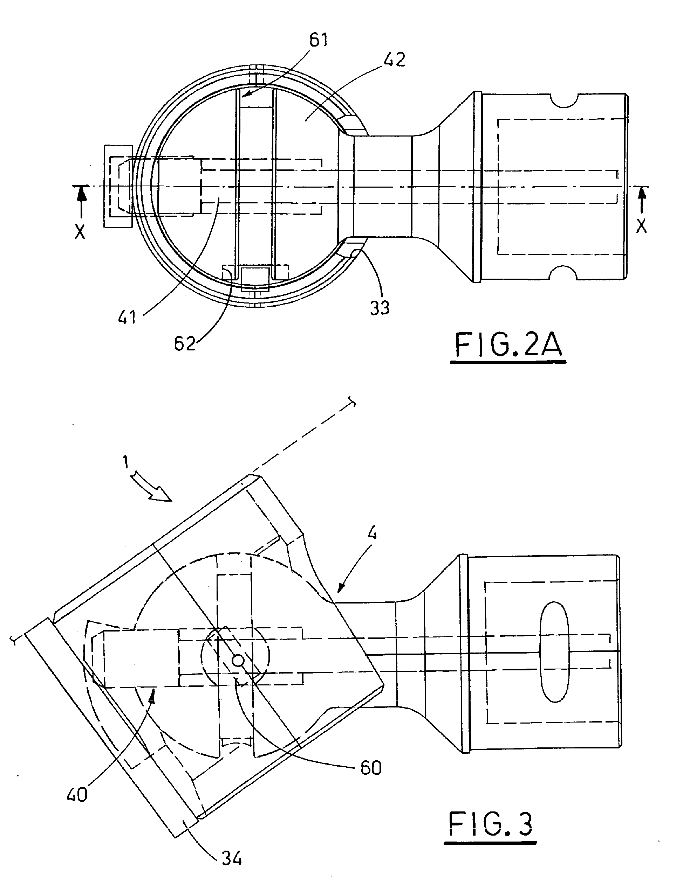

- figures 2 and 3 show schematically two different side views of the locking device of figure 1, in corresponding significant operating positions;
- figure 2A shows schematically a top view of the present locking device as illustrated in figure 2;

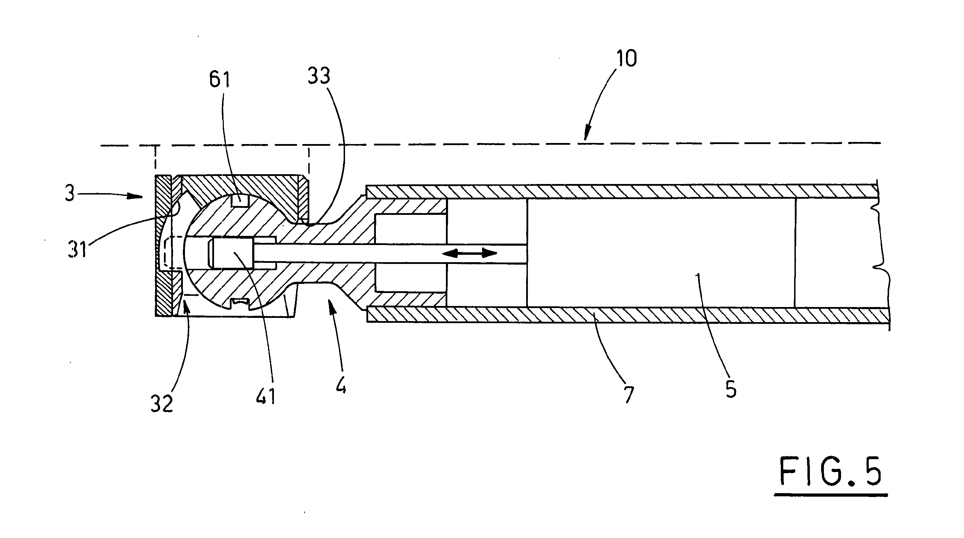

- figure 4 shows schematically a sectional view of the locking device of figure 2A along the section line X-X;
- figure 5 shows schematically an partially sectional view, at an enlarged scale, of a detail indicated with letter A of the locking device of figure 1.

Referring now to the above mentioned figures it is indicated with numeral 1 a locking device, made according to the present invention, for a dump body 10 of an industrial vehicle 100.

The locking device 1 comprises, as the corresponding known art devices, a fixed coupling member 3, mounted on the lower face of the dump body 10, fit to engage a corresponding ball joint member 4, mounted on the upper face of a frame 11 of the vehicle 100.

More specifically, in the present embodiment the ball joint member 4 comprises a spherical pin 42 located at one end of a shaft 7, which is fixed to the vehicle frame 11 in a horizontal position.

In the accompanying drawing tables reference has been made to a configuration where the dump body 10 comprises four locking devices 1 made according to the present invention, mounted at the dump body 10 and vehicle frame 11 corners, and co-operating with a pair of supporting shafts, a front one (not illustrated) and a rear one, which is indicated with numeral 7. The front and rear shafts are fixed to the vehicle frame 11 in a horizontal position, and crosswise with respect to the travel direction. This allows the vehicle's dump body 10 to be tilted over so as to carry out the dumping operation on both sides and on the rear side of the same vehicle.

The fixed coupling member 3 comprises a bell shaped body 34, open at its bottom, which defines a seat 32 for receiving the spherical pin 42 of the ball joint member 4. The bell shaped body 34 is provided with a side recess 33, fit to receive the shaft 7 when the spherical pin 42 engages the corresponding seat 32.

The bell shaped body 34 is provided with an antifrictional bearing (not shown as it is substantially known) which matches, with its inner face, the outer face of the spherical pin 42, when this latter is engaged with the bell shaped body 34. The antifrictional bearing is fit to reduce the rotational friction generated by the rotation of the spherical pin 42 inside the seat 32 when the dump body 10 tilts over.

The present locking device 1 comprises first locking means 40, provided in the fixed coupling member 4, driven by a corresponding driving member 5 for engage/disengage with second locking means 30, provided in the aforesaid ball joint member 3, in order to define the mutual locking/unlocking of the spherical pin 42 with respect to the bell shaped body 34.

In the presently described embodiment, the above first locking means 40 comprises a rod 41, slidable inside the spherical pin 42 and driven by a suitable driving means 5 (by example, hydraulic actuating means, or pneumatic actuating means, or electromechanical actuating means). The second locking means 30 comprises a groove 31, made in the bell shaped body 34, which has a curved shape for receiving an end portion of the sliding rod 41.

The locking device 1 moreover comprises stabilizing means, fit to stabilize the locking configuration of the spherical pin 42 into the seat 32 defined by the bell shaped body 34. Said stabilizing means comprises a key 60, formed in the bell shaped body 34, fit to engage a corresponding annular, guiding groove 61 made in the spherical pin 42.

The guiding groove 61 is moreover provided with a seat 62 for receiving the key 60, and is shaped so as to allow this latter to rotate when the spherical pin 42 is engaged with the seat 32.

The key 60 has a prismatic shape, and its ends are shaped as cylinders, the corresponding seat 62 of the guiding groove 61 has a cylindrical shape which is complementary to that of the key 60 ends.

The operating mode of the present locking device 1 will be now described. The normal running condition for the vehicle will be taken as a unoperating configuration of the locking device 1. In this configuration, the spherical pins 42 of each device 1 are arranged into their corresponding seats 32, each sliding rod 41 engaging its corresponding groove 31.

Generally speaking, any tilting of the dump body 10 is achieved by operating a centrally arranged hydraulic cylinder (not shown) interposed between the same dump body 10 and the vehicle frame 11.

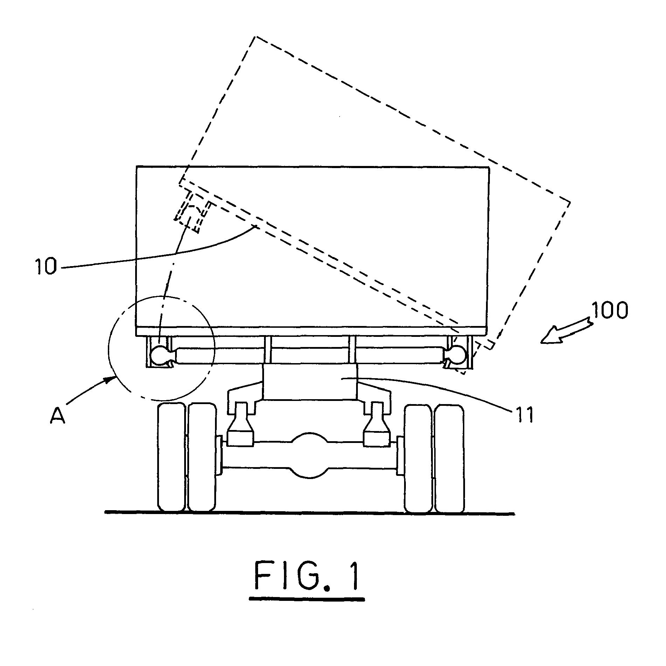

With reference to figure 1, by way of an example, a dump body tilt toward a right side, when seen from the vehicle back, will be described. In order to allow the dump body 10 to tilt over, rods 41 of the locking devices 1 located on the left side of the dump body 10 must be disengaged from their corresponding grooves 31, operated by their respective actuators. The operating commands can be done directly from the cab of vehicle 100 or from any different position in the same vehicle, located outside the vehicle cab. In any case, the operator is not forced to approach the dump body 10, as happens instead for the known art locking devices.

Immediately after the rods 41 of the locking devices 1 located at the left side from their corresponding grooves 31, the central hydraulic cylinder is operated, and the spherical pins 42 move away from their bell shaped bodies 34.

When the dump body 10 tilts over, the rods 41 of the locking devices 1 located at the right side stay engaged in their corresponding grooves 31, allowing then the spherical pins 42 to rotate in their seats 32 of the corresponding bell shaped bodies 34.

In the meanwhile, the keys 60 of the locking devices 1 located a the right side are free to rotate inside their corresponding seats 62 of the guiding grooves 61, thus preventing the spherical pins 42 from disengaging from their corresponding seats 32.

At the end of the tilting phase, the dump body 10 is moved back to its horizontal position, thus positioning the spherical pins 42 of the locking devices 1 located at the left side in engagement with their corresponding bell shaped bodies 34 again.

Before the vehicle 100 is driven off again, the rods 41 of the locking devices 1 located at the left side have to be moved to engage their corresponding grooves 31, so as to prevent any casual tilt over of the dump body 10.

A specular operating sequence will be carried out when the dump body 10 has to be tilted over the left side.

When a dumping operation toward the vehicle back has to be carried out, it has to be pointed out that, when the spherical pins 42 of the locking devices 1 located at the vehicle back rotate in their respective seats 32, the keys 60 engage slide along their corresponding guiding grooves 61, temporarily leaving their seats 62.

From the above description it can be easily understood that the present locking device 1 for the dump body 10 of an industrial vehicle 100 is able to automate all the operating phases preceeding the dump body tilt over, thus making them faster, easier to carry out for the vehicle operator, and also improving the operator's safety.

In fact, all the actuating operations for the devices members can be carried out directly from the vehicle's cab, or from any other position, without forcing the operator to approach the dump body, as occurs for the known art locking devices instead.

The aforesaid actuators can be pneumatic actuators, hydraulic actuators or electromechanical actuators as well.

## Claims

1. Locking device for the dump body of an industrial vehicle, comprising a fixed coupling member 3, provided on the lower face of a dump body 10, fit to engage a ball joint member 4 mounted on a frame 11 of said vehicle 100, said locking device 1 being **characterized in that** it comprises: first locking means 40, provided in said ball joint member 4 and driven by a corresponding driving member 5 for engaging/disengaging with second locking means 30, provided in said fixed coupling member 3, in order to allow a mutual locking/unlocking of this latter with respect to said ball joint member 4.

2. Locking device according to Claim 1, **characterized in that** said first locking means 40 comprises a rod 41, slidable inside said ball joint member 4 when driven by said driving means 5, and **in that** said second locking means 30 comprises a groove 31, provided in said fixed coupling member 3, fit to receive a free end portion of said sliding rod 41.

3. Locking device according to Claim 2, **characterized in that** said groove 31 has a curved shape.

4. Locking device according to any one of the previous Claims, **characterized in that** it comprises stabilizing means for the locked configuration of said ball joint member 4 to said fixed coupling member 3.

5. Locking device according to Claim 4, **characterized in that** said stabilizing means comprises at least one key 60, provided in said fixed coupling member 3, fit to engage a guiding groove 61, provided in said ball joint member 4, said guiding groove 61 being provided with a seat 62 for receiving said key 60 and shaped so as to allow said key 60 to perform free rotations when said ball joint member 4 is locked to said fixed coupling member 3.

6. Locking device according to Claim 5, **characterized in that** said key 60 is shaped according a prismatic shape, the opposite ends of said key 60 having a cylindrical shape, and said seat 62 also having a complementary, cylindrical shape.

7. Locking device according to Claim 5 or Claim 6, **characterized in that** said guiding groove has an annular shape.

8. Locking device according to any one of the previous Claims, **characterized in that** said driving means are hydraulic driving means, or pneumatic driving means, or electromechanical driving means.

9. Locking device according to any one of the previous Claims, **characterized in that** said fixed locking member comprises: a bell shaped body 34, open at its bottom, fit to define a seat 32 for receiving said ball joint member 4, said body 34 being provided with a side opening 33, which allows said ball joint member 4 to enter into said bell shaped body 34, and provided in its inner face with an antifrictional bearing, shaped to match the outer face of said ball joint member 4, when this latter is in its locked position, said antifrictional bearing being fit to reduce the rotational friction created between said ball joint member 4 and said bell shaped body 34.

10. Locking device according to Claim 9 **characterized in that** said ball joint member 4 comprises a spherical pin 42, fit to engage said bell shaped body 34, provided at one end of a shaft 7, this latter being horizontally fixed to a vehicle frame 11 and oriented crosswise with respect to the vehicle 100 travel direction.
